Europäisches Patentamt

European Patent Office

Office européen des brevets

(11) Publication number: **0 441 433 A1**

# EUROPEAN PATENT APPLICATION

(21) Application number: **91200207.8**

(22) Date of filing: **01.02.91**

(51) Int. Cl.5: **H04M 1/08**

(30) Priority: **05.02.90 NL 9000278**

(43) Date of publication of application:
**14.08.91 Bulletin 91/33**

(84) Designated Contracting States:
**DE ES IT NL SE**

(71) Applicant: **ERICSSON TELECOMMUNICATIE B.V.**
**1, Haansbergseweg**
**NL-5121 LG Rijen(NL)**

(72) Inventor: **van den Elshout, Adrianus Petrus Aloysius**
**94, De Braak**
**NL-4901 JL Oosterhout(NL)**

(74) Representative: **van der Arend, Adrianus G.A., Ir. et al**
**EXTERPATENT B.V. P.O. Box 90649**
**NL-2509 LP The Hague(NL)**

(54) Pivotable coupling for a hook arm of a telephone apparatus.

(57) Coupling for pivotably coupling a cradle arm (1) part to a base part (2) of a telephone. The coupling comprises at least three pivot members fitted in a row on the parts and having a common pivot axis (9), each member comprising an element fitted on one part and an element fitted on the other part. The members are of two types, the central member being of a different type from the other two members. An element of a member of a first type is a hook (10) which is radially bendable relative to the pivot axis (9) and the corresponding other element (16) has a recess (24) for receiving therein the free end of the hook after the assembly of the parts. An element of a member of a second type is a supporting element (19) for supporting thereon the corresponding other element (18) after assembly. Points of the elements touching each other after assembly all lie essentially on the pivot axis, each member having space at its contact points to allow it to turn the parts about the pivot axis between two different positions thereof, while the other element of the member of the second type is bounded by two edges intersecting one another on the pivot axis.

## PIVOTABLE COUPLING FOR A HOOK ARM OF A TELEPHONE APPARATUS.

The invention relates to a coupling for pivotably coupling a cradle arm part to a base part of a telephone. A cradle arm part can be operated by a user of the telephone, for example by placing a handset of the telephone on it, so that the cradle arm part operates a switch for making a connection or otherwise between the telephone and a communication line connected to it.

Known couplings for pivotably coupling a cradle arm part to a base part of a telephone require additional parts, which make it difficult to couple the cradle arm part to the base part, are relatively time-consuming and are expensive.

The object of the invention is to eliminate the disadvantages of the known couplings.

For achieving this object a coupling of the type mentioned in the preamble is characterised according to the invention in that the coupling comprises at least three pivot members fitted in a row on the parts and having a common pivot axis, each member comprising an element fitted on one part and an element fitted on the other part, in that the members are of two types, the central member being of a different type from the other two members, in that an element of a member of a first type is a hook which is radially bendable relative to the pivot axis and the corresponding other element has a recess for receiving therein the free end of the hook after the assembly of the parts, in that an element of a member of a second type is a supporting element for supporting thereon the corresponding other element after assembly, in that points of the elements touching each other after assembly all lie essentially on the pivot axis, each member having space at its contact points to allow it to turn the parts about the pivot axis between two different positions thereof, while the other element of the member of the second type is bounded by two edges intersecting one another on the pivot axis. This means that apart from the cradle arm part and the base part no other parts are needed for establishing the coupling. Since the hook of the pivot member of one type is bendable, it can be snapped easily into the recess of the corresponding other element of the pivot member.

The elements are preferably such that after assembly the elements of each member touch each other over a straight line section coinciding with the pivot axis. In this way a support is obtained between the elements over a greater distance, as a result of which a better distribution of forces occurs and the occurrence of wear is limited.

If there is sufficient space between the free end of the hook and the opposite part, the free end of the hook preferably has in its bending face a run-up edge extending on either side of a line intersecting the run-up edge and the pivot axis and bounding the stem of the hook on the pivot axis side. If the parts are then moved towards each other during assembly, the run-up face of the hook can first be moved against the corresponding other element and the parts can then be moved closer together, so that the hook will bend and the elements of each member are moved into each other by themselves.

For example, if the space between the free end of the hook and the opposite part is relatively small, it is preferable for a wedge to be provided for each member on one of its parts, a run-up edge of which runs from the pivot axis of one part for guiding the corresponding element of the other part over the run-up face during assembly, while for the member of the first type the other part is the part with the hook. Since the wedges ensure guidance, the cradle arm part can in this way easily be snapped into the base part and a simple machine can also be used for this.

A preferred embodiment is then such that for a member of the second type the element of the other part has a projection extending on one side of the pivot axis and being bounded on the pivot axis side by a run-up edge which runs through the pivot axis and is guided against the run-up edge of the corresponding wedge during assembly. This means that a counter run-up edge for the run-up edge of the wedge in question can be obtained in a simple manner.

The elements of at least one member are preferably of such a shape that after the assembly of the parts they prevent axial displacement of the parts.

The central member is preferably of the first type. The coupling consequently comprises only a single hook and is therefore easy and cheap to manufacture and easy to place.

The invention is explained with reference to the drawings, in which:

Fig. 1 shows a view of a cradle arm part with elements of the coupling according to the invention;

Fig. 2 shows a section along the line A-A of the cradle arm part of Fig. 1;

Fig. 3 shows a section along the line B-B of the cradle arm part of Fig. 1;

Fig. 4 shows a view of a part of the cradle arm part of Fig. 1 from side C;

Fig. 5 shows a top view of a part of a base part of a telephone with elements of the coupling according to the invention;

Fig. 6 shows a part of a section of the base part along the line D-D of Fig. 5;

Fig. 7 shows a part of a section of the base part along the line E-E of Fig. 5;

Fig. 8 shows a part of a section of the base part along the line F-F of Fig. 5; and

Fig. 9 shows a part of a section of the base part along the line G-G of Fig. 5;

Fig. 10 shows a part of an alternative embodiment of a hook of a cradle arm part of the coupling according to the invention.

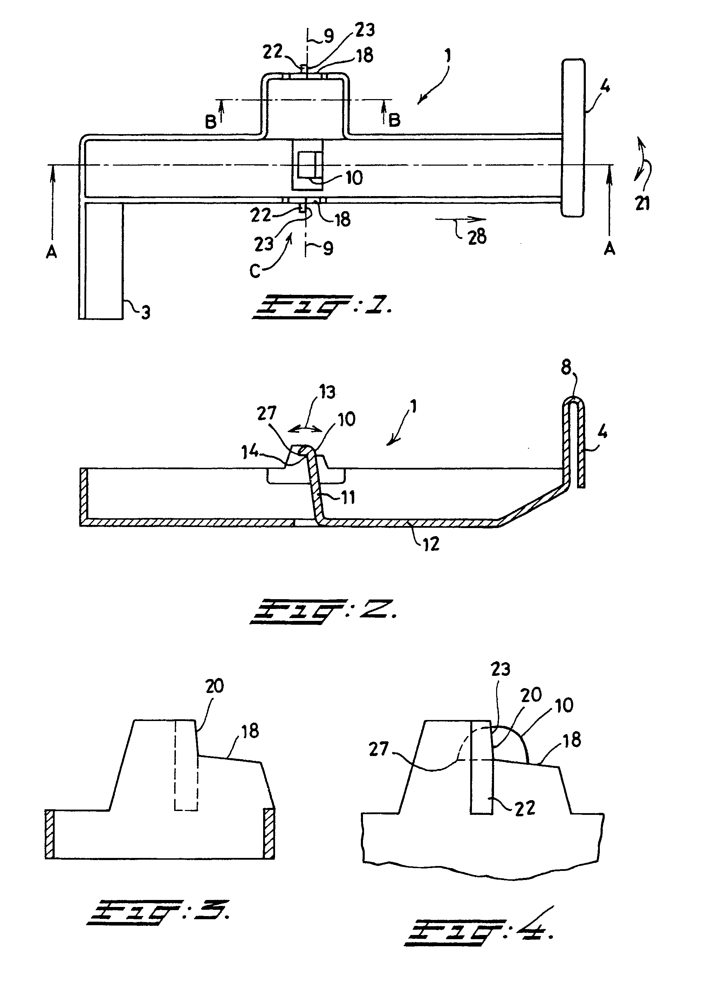

Fig. 1 shows a cradle arm part 1, in particular a side thereof which is called bottom side hereinafter and which is placed opposite the part of a base part 2 of a telephone shown in Fig. 5, the side of the base part 2 shown in Fig. 5 lying inside the telephone.

The cradle arm part 1 has at one end a side arm 3 and at the other end an actuating arm 4.

In the centre of the cradle arm part 1 is a part of a coupling which is suitable for interacting with a corresponding part of the coupling fitted in the centre of the part of the base part 2 shown in Fig. 6.

A switch 5 with, for example, spring-loaded contact tongues 6 is fitted on one side of the coupling part of the base part 2. The base part 2 has an elongated passage 7 on the other side of this coupling part.

When, as explained below, the cradle arm part 1 is coupled to the base part 2, the end 8 of the actuating arm 4 projects through the passage 7 and is pushed out of the telephone therein by the spring-loaded action of the contact tongues 6 on which the side arm 3 of the cradle arm part 1 rests. When the end 8 is pressed inwards, for example by replacing a handset of the telephone, the cradle arm part 1 will rotate about an axis 9, as a result of which the contact tongues 6 are pushed towards the base part 2, so that contacts of the switch 5 are broken and/or made.

The coupling according to the invention comprises a hook 10 with a stem 11 which runs approximately at right angles to the pivot axis and which originates from a bottom part of the cradle arm part 1. The material of the cradle arm part 1 is such that the hook 10 can bend in the direction of the arrow 13. The hook 10 has in its "jaw" a contact line 14 which touches a contact line 15 (Figs. 7 and 8) of the centre piece 16 of a bridge 17 of the coupling part of the base part 2 after the cradle arm part 1 and the base part 2 are coupled.

The cradle arm part 1 has supporting faces 18 which rest on supporting faces 19 (Figs. 5 and 9) of the coupling part of the base part 2 after the assembly of the cradle arm part 1 and the base part 2. The supporting faces 18 are bounded at the pivot axis 9 by boundary faces 20. The supporting faces 18 and the boundary faces 20 form such an angle that the parts 1, 2 can rotate relative to each other between a first position and a second position of the switch 5. The hook may be bounded at the contact line 14 by faces forming the same angle. However, since the hook 10 is spring-loaded, this is not necessary.

The hook 10 and the intermediate piece 16 of the bridge part 17 form a pivot member of a first type, and every three faces 18, 19, 20 form a pivot member of a second type. As shown, the pivot members of the second type lie at a relatively large distance from each other, so that turning in the direction of the arrow 21 is prevented.

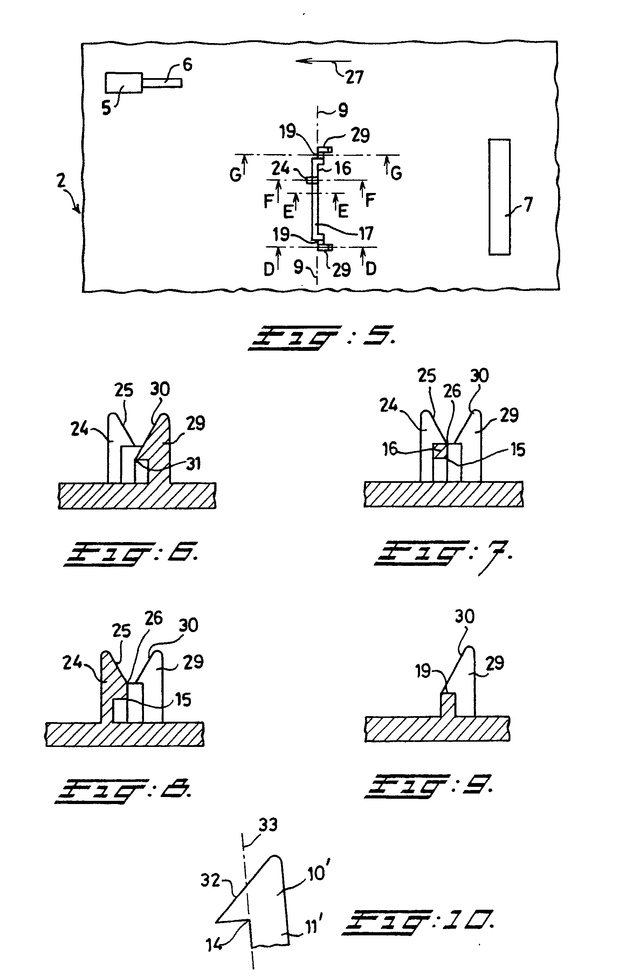

At each pivot member 18, 19, 20 the cradle arm part 1 has an axial projection 22 which is bounded on one side by a face or edge 23 (Fig. 4) running in a face running through the boundary faces 20.

A wedge 24 with a run-up edge 25 is fitted on the base part 2 at the intermediate piece 16 of the bridge part 17. As shown in Figs. 7 and 8, the run-up edge 25 runs through to such a point 26 above the contact line 15 of the intermediate piece 16 coinciding with the pivot axis 9 that when the cradle arm part 1 is brought parallel to the base part 2 and at right angles to the pivot axis 9 towards the base part 2, the point 27 (Figs. 1 and 4) of the hook 10 is guided over the run-up face 25 and then above and below the intermediate piece 16. Displacement of the base part 2 relative to the cradle arm part 1 in the direction indicated by the arrow 28 is prevented here by wedges 29 with a run-up face 30 which are fitted at the pivot members 18, 19, 20 on the base part 2, and over which the edge 23 of a corresponding projection 22 is then guided. For this, the run-up face 30 of a wedge 29 runs through to a point 31 (Fig. 6) coinciding with the pivot axis 9.

It is pointed out that various modifications are possible within the scope of the invention. Instead of using the projections 22 of the cradle arm part 1 and the wedges 24, 29, it is, for example, possible also to select a different shape of the free end of the hook, such as the hook 10' shown in Fig. 10 with a run-up face 32 extending on either side of a line 33 which runs through the contact line 14 of the hook 10' and which coincides with a boundary of the stem 11' on the side where the pivot axis 9 is situated. Such a hook 10' can be used if sufficient space is present between the cradle arm part 1 and the base part 2.

It is also possible to select as the central pivot member a pivot member of the first type and as the two outermost pivot members a pivot member of the first type with a hook 10 or 10'. More than three pivot members can be used also.

If a wedge 24 is used, instead of the wedges 29 on the base part 2, it is also possible to use wedges fitted on the cradle arm part 1, run-up faces of which wedges are guided over projections provided on the base part 2 during the assembly of the parts 1, 2.

The coupling between the base part and the cradle arm part according to the invention is easily to establish without additional components being needed, while the coupling forms a pivot of the knife type with very little friction.

**Claims**

1. Coupling for pivotably coupling a cradle arm part to a base part of a telephone, characterised in that the coupling comprises at least three pivot members fitted in a row on the parts and having a common pivot axis, each member comprising an element fitted on one part and an element fitted on the other part, in that the members are of two types, the central member being of a different type from the other two members, in that an element of a member of a first type is a hook which is radially bendable relative to the pivot axis and the corresponding other element has a recess for receiving therein the free end of the hook after the assembly of the parts, in that an element of a member of a second type is a supporting element for supporting thereon the corresponding other element after assembly, in that points of the elements touching each other after assembly all lie essentially on the pivot axis, each member having space at its contact points to allow it to turn the parts about the pivot axis between two different positions thereof, while the other element of the member of the second type is bounded by two edges intersecting one another on the pivot axis.

2. Coupling according to claim 1, characterised in that the elements are such that after assembly the elements of each member touch each other over a straight line coinciding with the pivot axis.

3. Coupling according to claim 1, characterised in that the free end of the hook has in its bending face a run-up edge extending on either side of a line intersecting the run-up edge and the pivot axis and bounding the stem of the hook on the pivot axis side.

4. Coupling according to any of claims 1 to 3, characterised in that a wedge is provided for each member on one of its parts, a run-up edge of which runs from the pivot axis of one part for guiding the corresponding element of the other part over the run-up face during assembly, while for the member of the first type the other part is the part with the hook.

5. Coupling according to claim 4, characterised in that for a member of the second type the element of the other part has a projection extending on one side of the pivot axis and being bounded on the pivot axis side by a run-up edge which runs through the pivot axis and is guided against the run-up edge of the corresponding wedge during assembly.

6. Coupling according to any of the preceding claims, characterised in that the elements of at least one member are of such a shape they prevent axial displacement of the parts.

7. Coupling according to any of the preceding claims, characterised in that the central member is of the first type.

FIG:1.

FIG:2.

FIG:3.

FIG:4.

_FIG:5._

_FIG:6._

_FIG:7._

_FIG:8._

_FIG:9._

_FIG:10._

**European
Patent Office**

**EUROPEAN SEARCH
REPORT**

Application Number

**EP 91 20 0207**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 144 048   (SIEMENS AG)<br>* Page 6, line 14 - page 8, line 32; figures 1-6 *<br>– – – | 1 | H 04 M 1/08 |
| A | DE-C-3 523 264   (KRONE GmbH)<br>* Column 3, line 53 - column 4, line 59; figures 1-3 *<br>– – – | 1,2 | |
| A | FR-A-2 157 641   (TELEFONAKTIEBOLAGET LM ERICS-SON)<br>* Page 3, line 30 - page 5, line 32; figure *<br>– – – | 1 | |
| A | DE-U-8 509 029   (SIEMENS AG)<br>* Page 2, line 25 - page 3, line 30; figure *<br>– – – – – | 1 | |

TECHNICAL FIELDS
SEARCHED (Int. Cl.5)

H 04 M

The present search report has been drawn up for all claims

| Place of search | Date of completion of search | Examiner |
|---|---|---|
| The Hague | 14 May 91 | DELANGUE P.C.J.G. |